# EUROPEAN PATENT SPECIFICATION

(11) **EP 3 002 839 B1**
(45) Date of publication and mention of the grant of the patent: **20.03.2019**
(21) Application number: 15194286.9
(22) Date of filing: 30.05.2007
(51) Int. Cl.: H02G 3/08

(54) **ASSEMBLY OF A FIRST AND A SECOND INSTALLATION BOX**
ZUSAMMENBAU EINER ERSTEN UND EINER ZWEITEN INSTALLATIONSBUCHSE
ASSEMBLAGE D'UNE PREMIÈRE BOÎTE D'INSTALLATION AVEC UNE DEUXIÈME BOÎTE D'INSTALLATION

(30) Priority: 30.05.2006 NL 1031907
(43) Date of publication of application: 06.04.2016
(62) Divisional of application: 07075413.0
(73) Proprietor: ABB B.V., 6716 AA Ede (NL)
(72) Inventor: RENCKENS, Thomas Philippus, 3742 ND BAARN (NL)
(74) Representative: Geurts, Franciscus Antonius

(56) References cited:
- AT-B- 383 913
- DE-A1- 3 518 109
- DE-A1- 10 249 289
- DE-U- 1 655 296
- DE-U1- 7 610 378

## Description

### BACKGROUND OF THE INVENTION

The invention relates to an assembly of installation boxes to be placed in a hole in a wall of a building.

Such boxes form a part of the electric wiring of the building, wherein switch material is attached onto the box and junctions are included between the cables in the box. The cables are accommodated in rigid or flexible cable protection pipes that connect to a spout on the installation box. During installation a blind hole is drilled in the wall, after which the box is put into the hole subsequently to be secured for instance by plaster. The boxes may be coupled to each other in series for the installation of for instance a series of switches at the wall.

A known installation box is provided with a box wall having several holders for insert spouts. The insert spouts comprise a spout member that is connected to a rectangular coupling wall, which during installation can be placed in one of the holders according to need. The position of the spout member with respect to the box wall is thus fixed, which may be disadvantageous when for instance a slot for the cable protection pipe is not slotted deep enough into the wall. The known insert spouts may therefore also be placed inverted into the holders in order to obtain another connection depth, however, when inverting such a spout it first needs to be taken completely out of the holder. Furthermore the transition from the spout member to the rectangular coupling wall may be acute to such an extent that the cables need to be pulled hard when passing the cables through the insert spout. The insulation sheath of the cables may get damaged as a result.

Patent document DE 102 49 289 A1 discloses an assembly of a first and a second installation box, wherein the first and second installation box both comprise a bottom wall and a circumferential wall of which an edge bounds an installation opening, both walls having a passage opening, wherein the wall of the first installation box comprises first connection means, and the wall of the second installation box comprises second connection means cooperating with the first, for connecting the boxes by a mutual displacement in an insert direction of the first and second connection means, wherein the insert direction is oriented transverse to the plane of the installation openings, the assembly further comprising first and second locking means for securing the mutual position of the first and second installation box.

It is an object of this disclosure to provide an installation box of which the position of the spout with respect to the box wall can easily be adjusted.

It is an object of this disclosure to provide an installation box wherein the cables can be pulled through the spout in a controlled manner.

### SUMMARY OF THE INVENTION

The invention, from one aspect, provides an installation box comprising a wall having a passage opening that may or may not be closed, and an insert piece having a spout to be placed in front of the passage opening, wherein the wall comprises first connection means and the insert piece comprises second connection means cooperating with the first, for connecting the insert piece to the wall by moving the insert piece in an insert direction with respect to the wall, wherein the first and second connection means are adapted for within the cooperation of the first and second connection means retaining the insert piece in the insert direction in at least two defined positions with respect to the wall.

The first and second connection means make it possible to retain the insert piece in at least two defined positions with respect to the wall, wherein the cooperation will not necessarily have to be ended. The position of the insert piece with respect to the wall can therefore easily be changed between the defined positions, wherein the orientation of the spout with respect to the wall can remain the same.

The adjustment range can be further increased when the first and second connection means are adapted for within the cooperation retaining the insert piece in at least three defined positions with respect to the wall.

After having been placed in one of the defined positions, the insert piece can be retained in said position when the first and second connection means are adapted for securing the insert piece against displacement in the insert direction and in the direction opposite thereto.

The orientation of the spout with respect to the wall may in the defined positions remain the same when the first and the second connection means are adapted for retaining the insert piece in the defined positions in the same spatial orientation with respect to the wall.

The position of the spout with respect to the wall can be manually changed by touch when the defined positions in the insert direction are consecutive, wherein the insert piece is movable to a next position by overcoming a threshold force

Preferably the threshold force is provided by a snap connection, so that reaching a next defined position, and thus a reliable position, can be heard.

In a first development the first connection means comprise first guiding means and first locking means, and the second connection means comprise second guiding means and second locking means for cooperation with the first guiding means and first locking means, respectively.

In one alternative which, as regards manufacturing technique, is easy to manufacture, the first and second locking means are situated adjacent to the first and second guiding means, respectively.

Preferably the first and second guiding means comprise a first and second rail, respectively, extending in insert direction, wherein the first and second rail are adjusted for interengagement. Due to the rails interengaging, a closed connection can be formed over the length of said rails, as a result of which it can be counteracted that for instance plaster enters during securing the installation box.

The first and second rail can be brought into interengagement in an orderly manner when the first and/or second rail at an insert side keep an insert opening free that is oriented transverse to the insert direction, for transverse to the insert direction bringing the first and second rail in a mutual positioning position. In the mutual positioning position, the first and second rail may for instance be parallel to each other and partially in line with each other.

Preferably the insert opening in the insert direction is spaced apart from a leading part of the first and/or second locking means. In this way it can be effected that the first and or second locking means will not become active until in or at a short distance from the defined positions. The leading part of the first and/or second locking means therefore need not be overcome when inserting into the insert opening.

The connection between the insert piece and the wall can be secured in a form-closed manner when the first and second locking means are adapted for a mutual engagement in a direction transverse to the insert direction.

In one alternative thereof the first and second locking means are adapted for mutual engagement with substantially opposite locking surfaces of the first and second locking means, which locking surfaces are at least partially spaced apart in the insert direction.

Preferably the first and second locking means are adapted for a mutual concave-convex engagement.

Alternatively or additionally the first and second locking means are adapted for a mutual mortise-and-tenon engagement, and/or a mutual male-female engagement. This for instance also includes a cam-hole engagement, wherein with respect to the insert direction the cam has an upwardly inclined and a downwardly inclined engagement surface.

Preferably the installation box comprises elastically deformable areas at the first and/or second locking means for elastic deformation during entering the cooperation of the first and second locking means and the subsequent preservation of the cooperation.

The defined positions can be distributed in the insert direction over a wide range when the first locking means in insert direction are designed so as to be multiple, wherein the first locking means in insert direction are situated on both sides of the passage opening.

Likewise the second locking means in insert direction can be designed so as to be multiple, wherein the second locking means in insert direction are situated on both sides of the spout.

Preferably the second locking means in insert direction are designed so as to be multiple, wherein a part of the second locking means is situated at a break-off member of the insert piece, which member preferably is situated transverse to the insert direction, wherein the part of the second locking means is removable by breaking off the break-off member. A part of the second locking means that does not have a retaining function in a defined position, can then be removed according to need together with the removable break-off member.

The installation box preferably comprises a bottom wall and a circumferential wall of which an edge bounds an installation opening, wherein the insert direction is oriented transverse to the plane of the installation opening.

The break-off member can easily be broken off after insertion of the insert piece, by from the bottom wall of the installation box pushing against the break-off member when the break-off member is positioned with respect to the spout for in connected condition of the connection means being situated near the bottom wall of the installation box and/or to protrude therefrom.

In a more universal alternative the first connection means are also adapted for entering a connection with the first connection means of a comparable installation box.

The disclosure furthermore, from a further aspect, provides an installation box preferably as mentioned above, comprising a box wall having a passage opening that may or may not be closed, and an insert piece having a spout to be placed in front of the insert opening, wherein the box wall comprises first connection means, and the insert piece comprises second connection means cooperating with the first, for connecting the insert piece to the box wall, wherein between the second connection means the insert piece comprises a cover wall oriented substantially transverse to the spout, of which cover wall an inside in connected condition of the spout is at least partially recessed from a boundary of the passage opening for defining a front space between the spout and the box wall.

The front space may ensure an even transition between spout and the inside of the installation box, as a result of which the cables can be inserted into the installation box in a controlled manner.

Damage to the insulation sheath of the cables can be particularly counteracted when at the inside the spout changes according to a curved surface, preferably a convexly curved surface, into the plate section. Towards the wall the spout preferably has a cross-section that broadens itself.

The spout can be placed in several positions with respect to the wall when the second connection means and the cover wall define a substantially rectangular covering for the passage opening, wherein the centre line of the spout is situated out of the centre of the covering.

The invention provides an assembly of a first and a second installation box according to claim 1.

The position of the first and/or second locking means on either side of the passage opening enables a connection between the first and second box that can also remain reliable when bending moments are inadvertently exerted on the connected boxes.

The first and second box can after effecting be retained in this connected condition when the first and second connection means are adapted for securing the first and second installation box against mutual movement in the insert direction and in a direction opposite thereto.

Preferably the first and second installation box both comprise a circumferential wall of which an edge bounds an installation opening, wherein the insert direction is oriented transverse to the plane of the installation openings.

The first and second locking means preferably are adjusted to locking the boxes in a mutual position in which the installation openings are situated substantially in the same plane. Switch material to be built up can thus be attached to the installation boxes using a linear measure of screws only.

The connection can be locked by a form-closed confinement when the first locking means comprise a slot bounded in its longitudinal direction and extending in insert direction, and the second locking means comprise two protrusions that can be placed when inserting into the slot, wherein the centre-to-centre distance between the protrusions is smaller than the distance between the boundaries of the slot.

The first and second connection means comprise a first and second rail, respectively, extending in insert direction, wherein the first and second rail are adjusted for interengagement. Due to the rails interengaging a closed connection can be formed over the length of said rails, as result of which it can be counteracted that for instance plaster enters when securing the installation boxes.

The first and second rail can be brought into interengagement in an orderly manner when the first and/or second rail at an insert side keep an insert opening free that is oriented transverse to the insert direction, for transverse to the insert direction bringing the first and second rail in a mutual positioning position. In the mutual positioning position, the first and second rail may for instance be parallel to each other and partially in line with each other.

The insert opening in the insert direction preferably is spaced apart from a leading part of the first and/or second locking means. In this way it can be effected that the first and or second locking means will not become active until in or at a short distance from the coupled end position. The leading part of the first and/or second locking means therefore need not be overcome when inserting into the insert opening.

In one embodiment which, as regards manufacturing technique, is easy to manufacture, the first and/or second locking means are situated adjacent to the first and second rail, respectively.

In a more universal embodiment the first and/or second connection means are also adapted for connecting an insert piece having a spout to the first and second installation box, respectively.

From a further aspect, the disclosure furthermore provides an installation box comprising a wall having a passage opening that may or may not be closed, and an insert piece having a spout to be placed in front of the insert opening in an insert direction, wherein the wall comprises first connection means having first locking means, and the insert piece comprises second connection means having second locking means cooperating with the first, for connecting the insert piece to the wall and thus locking the connection means, wherein the first and second locking means are adapted for within the cooperation of the first and second connection means in insert direction stepwise locking the insert piece with respect to the wall.

The invention furthermore provides, from a further aspect, an installation box comprising a wall having a passage opening that may or may not be closed, and an insert piece having a spout to be placed in front of the insert opening in an insert direction, wherein the wall comprises first connection means having first locking means and the insert piece comprises second connection means having second locking means cooperating with the first, for connecting the insert piece to the wall and thus locking the connection means, wherein the first and second locking means are adapted for within the cooperation of the first and second connection means in the insert direction locking the insert piece with respect to the wall in several locking positions.

The aspects and measures described in this description and claims of the application and/or shown in the drawings of this application may where possible also be used individually. This particularly applies to the measures and aspects that have been described per se in the sub claims.

### SHORT DESCRIPTION OF THE DRAWINGS

The invention will be elucidated on the basis of a number of exemplary embodiments shown in the attached drawings, in which:
Figure 1 shows a view in perspective of an assembly of installation boxes according to the invention with slide-on spout;
Figure 2 shows a view in perspective of the installation boxes according to figure 1, without the slide-on spout;
Figure 3 shows a view in perspective of the coupling side of the slide-on spout according to figure 1;
Figure 4 shows a view in perspective of a vertical cross-section of the installation box and the slide-on spout according to the lines IV-IV in figure 1;
Figures 5A-5C show vertical cross-sections of the installation box and the slide-on spout according to the line V-V in figure 1, in three possible locking positions of the slide-on spout;
Figure 6 shows an alternative slide coupling for the installation box; and
Figure 7 shows an alternative slide coupling for the slide-on spout.

### DETAILED DESCRIPTION OF THE DRAWINGS

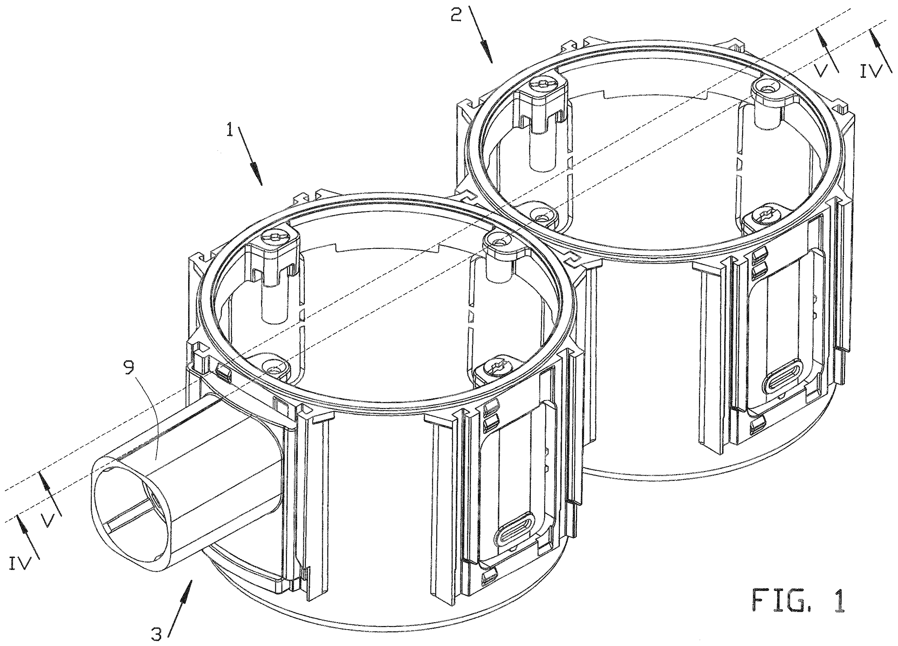

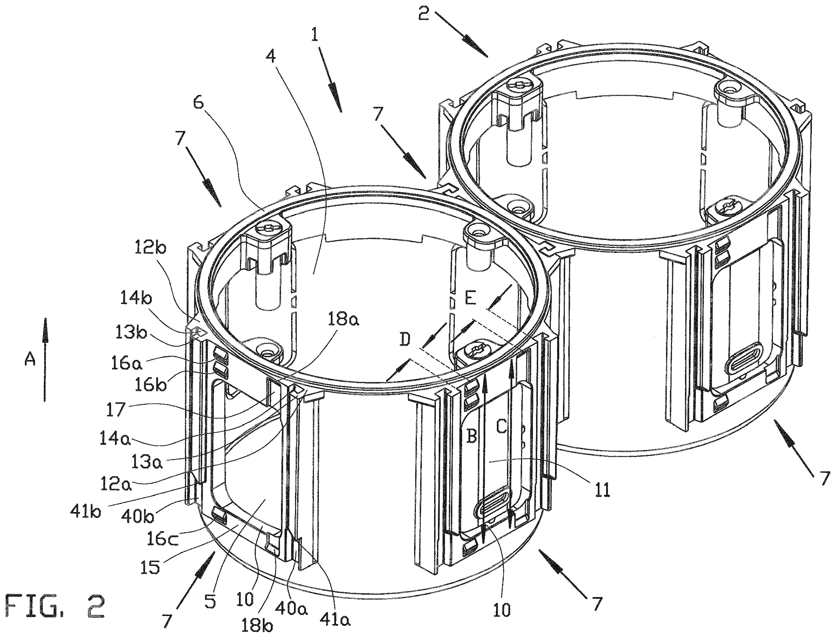

The installation box 1 according to figures 1 and 2 comprises a bottom wall 5 and a circumferential wall 4 having an installation edge 6 provided with screws and threaded bushes for building up switch material. The installation box 1 is manufactured of injection mouldable synthetic material. The circumferential wall 4 comprises four passage openings 10 distributed all round for lines, and a few break-out gates 11 for keeping the passage openings 10 closed. At the outside of the circumferential wall 4, at the location of the passage openings 10, the installation box 1 comprises four slide couplings 7 for coupling the installation box 1 to an in this example identical installation box 2, or for coupling a separate slide-on spout 3 to the installation box 1.

As shown in figure 2 each slide coupling 7 comprises an abutment surface 15 surrounding the opening 10 and along the longitudinal sides 12a, 12b that are transverse to the plane of the installation ring 6, two parallel hook-shaped rails 13a, 13b that bound identically shaped hook slots 14a, 14b. At their bottom side the hook rails 13a, 13b are shorter than the hook slots 14a, 14b for providing in insert direction A elongated insert openings 40a, 40b. The hook rails 13a, 13b comprise an inclined pilot edge 41a, 41b for facilitating the access below the hook rails 13a, 13b. At a short distance from the hook rail 13b, at one side of slide coupling 7 a series of locking cams 16a, 16b, 16c are situated parallel thereto and extending from the abutment surface 15. In insert direction A the first and second locking cam 16a, 16b are situated above the passage opening 10, and the third locking cam 16c is situated below the passage opening 10. In insert direction A each locking cam 16a, 16b, 16c comprises an ascending locking surface which via an edge or curve changes into an opposite descending locking surface. In this example the ascending locking surface and the descending locking surface are at substantially the same inclined angle to the insert direction A. The inclined angle is approximately 45°.

Opposite the locking cams 16a, 16b, 16c and parallel thereto, the slide coupling 7 comprises a slot 17 that is recessed with respect to the abutment surface 15, and which at the upper and lower side is bounded by end thresholds 18a, 18b. The ultimate distance B in insert direction A between the outermost cams 16a, 16c substantially equals the ultimate length C of the bounded slot 17 between the end thresholds 18a, 18b. The centre-to-centre distance, measured between the transition edges of said cams 16a, 16c is smaller than the ultimate length C of the bounded slot 17. The distance D between the centre of the locking cams 16a, 16b, 16c and the hook rail 13b substantially equals the distance E between the centre of the slot 17 and the side of the hook slot 14a.

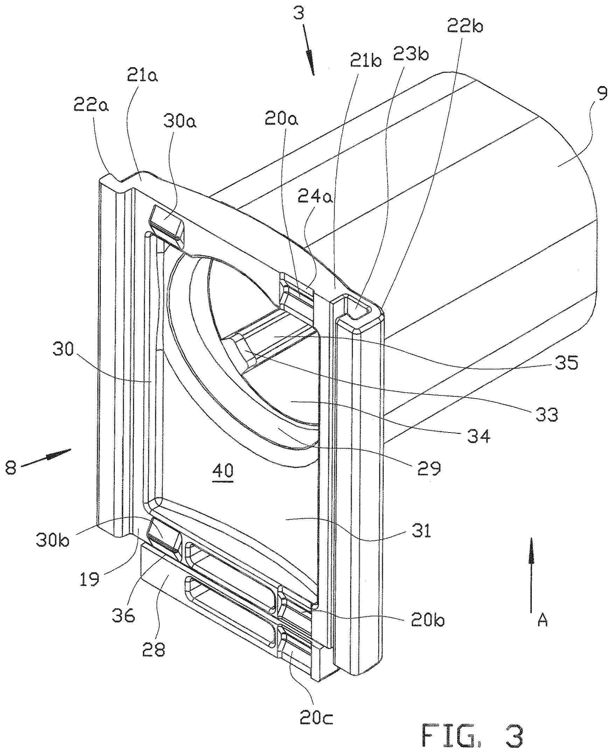

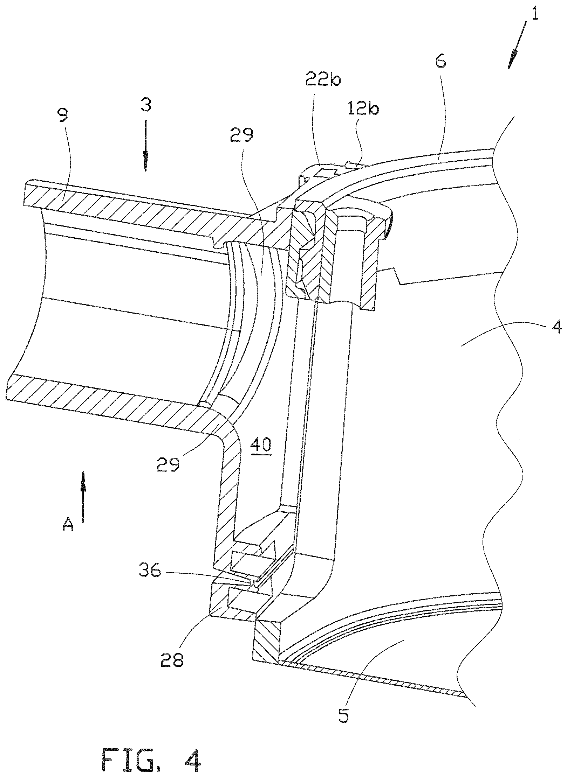

The slide-on spout 3 as shown in figures 3 and 4 comprises a slide coupling 8 and a spout member 9 having connecting ribs 35 and end stops 33 at the inner wall 34 for securing a rigid line in the spout member 9. The spout member 9 is positioned eccentric with respect to a cover wall member 31 having a substantially rectangular contour for being able to fully cover one of the passage openings 10. The cover wall member 31 has a curvature comparable to the curvature of the circumferential wall 4. With a convex curve 29, the inner wall 34 of the spout member 9 changes into the surface of the cover wall member 31. Around the cover wall member 31 the slide-on spout 3 has an abutment surface 19, wherein the cover wall member 31 with a circumferential rebate 30 is situated recessed with respect to said abutment surface 19 to define an intermediate space 40 between the cover wall member 31 and the transition to the abutment surface 19.

At the longitudinal sides 21a, 21b, the slide coupling 8 of the slide-on spout 3 comprises hook rails 22a, 22b, wherein at one side the hook rail 22b bounds a similarly shaped hook slot 23b. On the abutment surface 19, at a short distance from one hook rail 22a, a first and second locking cam 30a, 30b are situated at the lower side and the upper side of the spout transition 29. In insert direction A each locking cam 30a, 30b comprises an ascending locking surface which via an edge or curve changes into an opposite descending locking surface. In this example the ascending locking surface and the descending locking surface are at substantially the same inclined angle to the insert direction A. The inclined angle is approximately 45°.

At the opposite longitudinal side 21b the slide coupling 8 comprises a series of locking holes 20a, 20b, 20c situated parallel thereto, of which locking holes the first locking hole 20a is situated above the spout member 9 and the second and third are situated below the spout member 9. The third locking hole 20c is situated in an break-off member 28 at the bottom side of the slide-on spout 3. The break-off member 28 is connected by means of a break strip or living hinge 29 in order to be optionally broken off from the rest of the slide-on spout 3, or to be swung away from it.

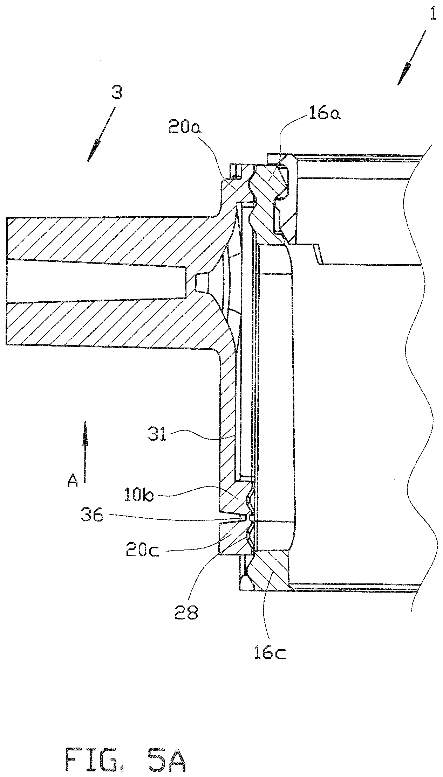

Figures 4 and 5A-5C show the slide-on spout 3 which with the slide coupling 8 has been coupled to the slide coupling 7 of the installation box 1. To that end the hook rails 22a, 22b of the slide coupling 8 have been fittingly inserted from the bottom side in slide direction A into the hook slots 14a, 14b behind the hook rails 13a, 13b of the slide coupling 7. The third locking cam 16c has then remained out of engagement from the leading first locking hole 20a because the hook rails 22a, 22b have been inserted transverse to the slide direction A via the insert openings 40a, 40b into the hook slots 14a, 14b.

Figure 5A shows a cross-section of the installation box 1 and the slide-on spout 3 slid thereon according to the lines V-V in figure 1, locked in an upper position. Only the first locking cam 16a of the installation box 1 is in engagement with the first locking hole 20a of the slide-on spout 3. The first locking cam 30a (not shown in the figure) of the slide-on spout 3 with its in insert direction A ultimate part, in this example the descending locking surface, abuts the upper threshold 18a of the installation box 1. The cover wall member 31 and the break-off member 28 together close off the passage opening 10.

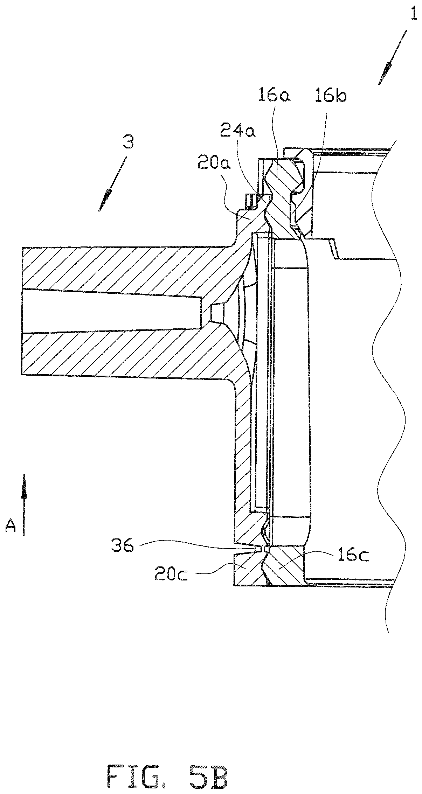

In figure 5B the slide-on spout 3 is locked in an intermediate position, wherein the second locking cam 16b of the installation box 1 is in engagement with the first locking hole 20a of the slide-on spout 3 in order to retain the slide-on spout 3 in the position shown. The upper edge 24a situated above the first locking hole 20a of the slide-on spout 3, is confined between the facing locking surfaces of the first and second locking cam 16a, 16b of the installation box 1. The third locking cam 16c of the installation box 1 is in engagement with the third locking hole 20c of the slide-on spout 3 under slight pressure only of the break strip 36.

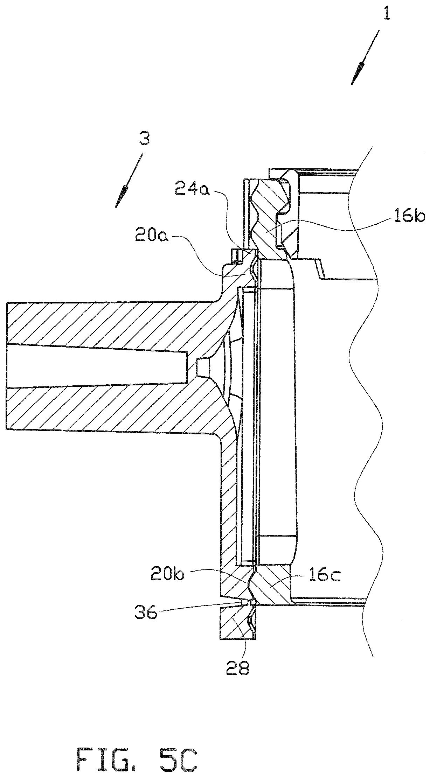

In figure 5C the slide-on spout 3 is locked in the lowermost position, wherein the third locking cam 16c of the installation box is in engagement with the second locking hole 20b of the slide-on spout 3. The second locking cam 30b (not shown in this figure) of the slide-on spout 3, with its in insert direction A ultimate part, in this example the ascending locking surface, abuts the lowermost threshold 18b and the upper edge 24a abuts the second locking cam 16b of the installation box 1, as a result of which also a pair of facing, abutting locking surfaces has been effected. The cover wall member 31 covers the passage opening 10, and the break-off member 28 protrudes beyond the plane of the bottom 5. The break-off member 28 has no function here, so that it can be broken off.

When entering the slide coupling between the boxes 1, 2 as shown in figure 1, the in insert direction A ultimate parts of the first and third locking cam 16a, 16c are confined between the end thresholds 18a, 18b of the slot 17. When sliding the slide couplings 7 into each other, the rails 13a, 13b have been inserted via the insert openings 40a, 40b into the hook slots 14a, 14b, wherein the first and second locking cam 16a, 16b have been placed in the slot 17 transverse to the insert direction A past the lowermost end threshold 18b. When sliding further until in the end position according to figure 1, the locking cams 16a-c of both installation boxes 1, 2 have entered within the end thresholds 18a, 18b by snapping, wherein the outermost locking surfaces that face away from each other of the locking cams 16a, 16c abut the end thresholds 18a, 18b.

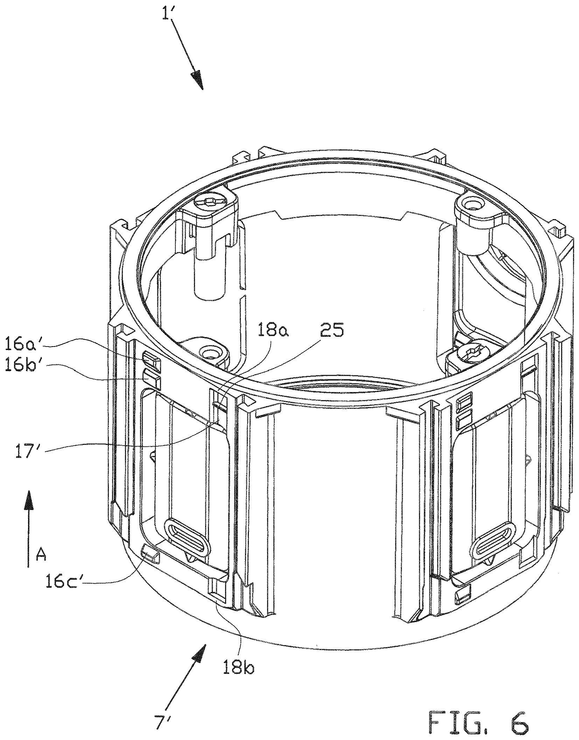

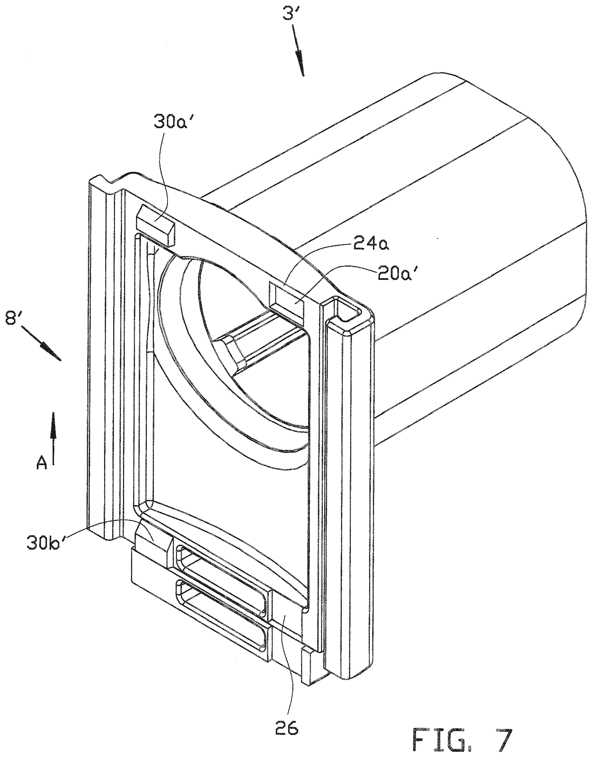

Figures 6 and 7 show a second alternative of the installation box 1' and the slide-on spout 3' according to the disclosure, having slightly alternative slide couplings 7', 8'. Only the parts which, as regards shape, are slightly different from the first alternative, have been provided with a reference number corresponding to the first alternative but with an accent.

The slide coupling 7' of the installation box 1' is provided with a first, second and third locking cam 16a', 16b', 16c'. The first locking cam 16a' in insert direction A comprises an upwardly inclined locking surface which via a transitional surface extending in insert direction A changes in a with respect to the ascending locking surface more steeply downwardly inclined locking surface. The second locking cam 16b' in insert direction A comprises a steeply ascending locking surface which via a transitional surface extending in insert direction A, changes into an opposite equally steeply descending locking surface. The third locking cam 16c' in insert direction A comprises a steeply ascending locking surface which via a transitional surface extending in insert direction A, changes into a, with respect to the ascending locking surface, less steeply downwardly inclined locking surface. In this example the steep locking surfaces are at an angle of 45-80° to the insert direction A. At the upper side the slot 17' has been provided with a partition 25 by which means an end chamber the size of a locking cam has been formed in the slot 17'.

The slide coupling 8' of the slide-on spout 3' comprises a first and a second locking cam 30a, 30b. The first locking cam 30a' in insert direction A comprises a steeply ascending locking surface which via a transitional surface extending in insert direction A, changes into an opposite equally steeply descending locking surface. The second locking cam 30b' in insert direction A comprises a steeply ascending locking surface which via a transitional surface extending insert direction A, changes into an opposite and less steeply descending locking surface. The steep locking surfaces are at an angle of 45-80° to the insert direction A. At the opposite side the slide coupling 8' comprises a first locking hole 20a' having internal dimensions to be able to accommodate the first or second locking cam 16a', 16b'. In the insert direction A in line with the first locking hole 20a' the slide coupling 8' comprises a through-slot 26.

In the upper locking position of the slide-on spout 3' in accordance with figure 5A, the first locking cam 16a' of the installation box 1' is confined in the first locking hole 20a' of the slide-on spout 3', and the first locking cam 30a' of the slide on spout 3' is confined between the uppermost threshold 18a and the partition 25 of the installation box 1'.

In the middle locking position in accordance with figure 5B, the second locking cam 16b' of the installation box 1' is confined in the first locking hole 20a' of the slide-on spout 3', and the first locking cam 30a' of the slide-on spout 3' abuts the partition 25 of the installation box 1'.

In the lowermost locking position in accordance with figure 5C the second locking cam 30b' of the slide-on spout 3' with the steeply ascending locking surface abuts the lowermost threshold 18b of the installation box 1'. The upper edge 24a of the slide-on spout 3' with the steeply ascending locking surface then abuts the second locking cam 16b of the installation box 1, as a result of which also a pair of facing, abutting locking surfaces has been effected.

## Claims

1. Assembly of a first and a second installation box (1, 2), wherein the first and second installation box (1, 2) both comprise a bottom wall (5) and a circumferential wall (4) of which an edge (6) bounds an installation opening, both walls (4) having a passage opening (10) that may or may not be closed, wherein the wall of the first installation box (1) comprises first connection means (7), and the wall (4) of the second installation box (2) comprises second connection means (7) cooperating with the first (7), for connecting the boxes (1, 2) by a mutual displacement in an insert direction (A) of the first and second connection means (7), wherein the insert direction (A) is oriented transverse to the plane of the installation openings, wherein each of the first and second connection means comprises a first and second rail (13a, 13b), respectively, extending in insert direction (A) and parallel to each other, wherein the first and second rail (13a, 13b) are adjusted for interengagement, wherein the first and second connection means (7) comprise first and second locking means (16a, 16b, 16c, 17), respectively, for securing the mutual position of the first and second installation box (1, 2), wherein in the insert direction (A) the first locking means (16a, 16b, 17) are situated above the passage opening (10) and the second locking means (16c) are situated below the passage opening (10) of the first and second installation box (1, 2), respectively.

2. Assembly according to claim 1, wherein the first and second connection means (7) are adapted for securing the first and second installation box (1, 2) against mutual movement in the insert direction (A) and in a direction opposite thereto.

3. Assembly according to claim 1, wherein the first and second locking means (16a, 16b, 16c, 17) are adjusted to locking the boxes (1, 2) in a mutual position in which the installation openings are situated substantially in the same plane.

4. Assembly according to any one of the preceding claims, wherein the first locking means comprise a slot (17) bounded in its longitudinal direction and extending in insert direction (A), and the second locking means comprise two protrusions (16a, 16b, 16c) that can be placed when inserting into the slot (17), wherein the centre-to-centre distance between the protrusions is smaller than the distance (C) between the boundaries of the slot.

5. Assembly according to claim 1, wherein the first and/or second rail (13a, 13b) at an insert side keep an insert opening (40a, 40b) free that is oriented transverse to the insert direction (A) for bringing the first and second rail (13a, 13b) in a mutual positioning position.

6. Assembly according to claim 5, wherein the insert opening (40, 40b) in the insert direction (A) is spaced apart from a leading part of the first and/or second locking means (16a, 16b, 16c, 17) .

7. Assembly according to any one of the preceding claims, wherein the first and/or second locking means (16a, 16b, 16c, 17) are situated next to the first and second rail (13a, 13b), respectively.

8. Assembly according to any one of the preceding claims, wherein the first and/or second connection means (7) are also adapted for connecting an insert piece (3) having a spout (9) at the first or second installation box (1, 2), respectively.

## Patentansprüche

1. Anordnung aus einer ersten und einer zweiten Installationsbuchse (1, 2), wobei die erste und die zweite Installationsbuchse (1, 2) beide eine Bodenwand (5) und eine Umfangswand (4), deren Kante (6) eine Installationsöffnung begrenzt, aufweisen, wobei beide Wände (4) eine Durchgangsöffnung (10) aufweisen, die geschlossen sein kann oder nicht geschlossen sein kann, wobei die Wand der ersten Installationsbuchse (1) eine erste Verbindungseinrichtung (7) aufweist, und die Wand (4) der zweiten Installationsbuchse (2) eine zweite Verbindungseinrichtung (7) aufweist, die mit der ersten (7) zusammenwirkt, um die Buchsen (1, 2) durch eine gegenseitige Verschiebung in einer Einschubrichtung (A) der ersten und zweiten Verbindungseinrichtungen (7) zu verbinden, wobei die Einschubrichtung (A) quer zu der Ebene der Installationsöffnungen ausgerichtet ist, wobei jede der ersten und zweiten Verbindungseinrichtungen erste bzw. zweite Schienen (13a, 13b) aufweist, die sich in der Einschubrichtung (A) erstrecken und parallel zueinander sind, wobei die ersten und zweiten Schienen (13a, 13b) für eine gegenseitige Ineingriffnahme angepasst sind, wobei die ersten und zweiten Verbindungseinrichtungen (7) erste bzw. zweite Verriegelungseinrichtungen (16a, 16b, 16c, 17) aufweisen, zum Sichern der gegenseitigen Position der ersten und zweiten Installationsbuchse (1, 2), wobei in der Einschubrichtung (A) die erste Verriegelungseinrichtung (16a, 16b, 17) sich über der Durchgangsöffnung (10) und die zweite Verriegelungseinrichtung (16c) sich unter der Durchgangsöffnung (10) der ersten bzw. zweiten Installationsbuchse (1, 2) befinden.

2. Anordnung nach Anspruch 1, wobei die ersten und zweiten Verbindungseinrichtungen (7) ausgebildet sind zum Sichern der ersten und zweiten Installationsbuchse (1, 2) gegen eine gegenseitige Bewegung in Einschubrichtung (A) und in einer dazu entgegengesetzten Richtung.

3. Anordnung nach Anspruch 1, wobei die ersten und zweiten Verriegelungseinrichtungen (16a, 16b, 16c, 17) so eingestellt sind, dass sie die Buchsen (1, 2) in einer gegenseitigen Position verriegeln, in der sich die Installationsöffnungen im Wesentlichen in der gleichen Ebene befinden.

4. Anordnung nach einem der vorhergehenden Ansprüche, wobei die erste Verriegelungseinrichtung einen Schlitz (17) aufweist, der in seiner Längsrichtung begrenzt ist und sich in der Einschubrichtung (A) erstreckt, und die zweite Verriegelungseinrichtung zwei Vorsprünge (16a, 16b, 16c) aufweist, die beim Einschieben in den Schlitz (17) platziert werden können, wobei der Mittenabstand zwischen den Vorsprüngen kleiner ist als der Abstand (C) zwischen den Begrenzungen des Schlitzes.

5. Anordnung nach Anspruch 1, wobei die erste und/oder zweite Schiene (13a, 13b) auf einer Einschubseite eine Einschuböffnung (40a, 40b) frei hält, die quer zur Einschubrichtung (A) ausgerichtet ist, um die erste und zweite Schiene (13a, 13b) in eine gegenseitige Positionierungslage zu bringen.

6. Anordnung nach Anspruch 5, wobei die Einschuböffnung (40, 40b) in Einschubrichtung (A) vom vorderen Teil der ersten und/oder zweiten Verriegelungseinrichtung (16a, 16b, 16c, 17) beabstandet ist.

7. Anordnung nach einem der vorhergehenden Ansprüche, wobei die erste und/oder zweite Verriegelungseinrichtung (16a, 16b, 16c, 17) neben der ersten bzw. zweiten Schiene (13a, 13b) angeordnet ist.

8. Anordnung nach einem der vorhergehenden Ansprüche, wobei die erste und/oder zweite Verbindungseinrichtung (7) auch zum Verbinden eines Einsatzstücks (3) mit einem Stutzen (9) an der ersten bzw. zweiten Installationsbuchse (1, 2) geeignet ist.

## Revendications

1. Ensemble d'une première et d'une seconde boîte d'installation (1, 2), dans lequel les première et seconde boîtes d'installation (1, 2) comprennent toutes deux une paroi inférieure (5) et une paroi circonférentielle (4) dont un bord (6) délimite une ouverture d'installation, les deux parois (4) ayant une ouverture de passage (10) qui peut être fermée ou ne pas l'être, dans lequel la paroi de la première boîte d'installation (1) comprend un premier moyen de raccordement (7), et la paroi (4) de la seconde boîte d'installation (2) comprend un second moyen de raccordement (7) coopérant avec le premier (7), pour raccorder les boîtes (1, 2) par un déplacement mutuel dans une direction d'insertion (A) des premier et second moyens de raccordement (7), dans lequel la direction d'insertion (A) est orientée de manière transversale par rapport au plan des ouvertures d'installation, dans lequel chacun des premier et second moyens de raccordement comprend un premier et un second rail (13a, 13b) respectivement, s'étendant dans la direction d'insertion (A) et parallèlement entre eux, dans lequel les premier et second rails (13a, 13b) sont ajustés pour la mise en prise mutuelle, dans lequel les premier et second moyens de raccordement (7) comprennent des premier et second moyens de blocage (16a, 16b, 16c, 17), respectivement, pour fixer la position mutuelle des première et seconde boîtes d'installation (1, 2), dans lequel, dans la direction d'insertion (A), les premiers moyens de blocage (16a, 16b, 17) sont situés au-dessus de l'ouverture de passage (10) et les seconds moyens de blocage (16c) sont situés au-dessous de l'ouverture de passage (10) des première et seconde boîtes d'installation (1, 2), respectivement.

2. Ensemble selon la revendication 1, dans lequel les premier et second moyens de raccordement (7) sont adaptés pour fixer les première et seconde boîtes d'installation (1, 2) contre le mouvement mutuel dans la direction d'insertion (A) et dans une direction opposée à cette dernière.

3. Ensemble selon la revendication 1, dans lequel les premier et second moyens de blocage (16a, 16b, 16c, 17) sont ajustés pour bloquer les boîtes (1, 2) dans une position mutuelle dans laquelle les ouvertures d'installation sont situées sensiblement dans le même plan.

4. Ensemble selon l'une quelconque des revendications précédentes, dans lequel les premiers moyens de blocage comprennent une fente (17) délimitée dans sa direction longitudinale et s'étendant dans la direction d'insertion (A), et les seconds moyens de blocage comprennent deux saillies (16a, 16b, 16c) qui peuvent être placées lors de l'insertion dans la fente (17), dans lequel la distance centre à centre entre les saillies est inférieure à la distance (C) entre les limites de la fente.

5. Ensemble selon la revendication 1, dans lequel le premier et/ou le second rail (13a, 13b) au niveau d'un côté d'insertion maintiennent une ouverture d'insertion (40a, 40b) libre qui est orientée transversalement par rapport à la direction d'insertion (A) pour amener les premier et second rails (13a, 13b) dans une position de positionnement mutuel.

6. Ensemble selon la revendication 5, dans lequel l'ouverture d'insertion (40, 40b) dans la direction d'insertion (A) est espacée d'une partie d'attaque des premier et/ou second moyens de blocage (16a, 16b, 16c, 17) .

7. Ensemble selon l'une quelconque des revendications précédentes, dans lequel les premier et/ou second moyens de blocage (16a, 16b, 16b, 17) sont situés à proximité des premier et second rails (13a, 13b) respectivement.

8. Ensemble selon l'une quelconque des revendications précédentes, dans lequel les premier et/ou second moyens de raccordement (7) sont également adaptés pour le raccordement d'une pièce d'insertion (3) ayant un bec verseur (9) au niveau de la première ou de la seconde boîte d'installation (1, 2), respectivement.
